(19) Europäisches Patentamt European Patent Office Office européen des brevets

(11) **EP 4 598 065 A1**

(12) **EUROPEAN PATENT APPLICATION**
published in accordance with Art. 153(4) EPC

(43) Date of publication:
**06.08.2025 Bulletin 2025/32**

(21) Application number: **23869603.3**

(22) Date of filing: **28.04.2023**

(51) International Patent Classification (IPC):
***H04W 4/02*** (2018.01)

(52) Cooperative Patent Classification (CPC):
**G01S 3/14; H04W 4/02; H04W 64/00**

(86) International application number:
**PCT/CN2023/091867**

(87) International publication number:
**WO 2024/066348 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022 CN 202211193565**

(71) Applicant: **ZTE CORPORATION
Shenzhen, Guangdong 518057 (CN)**

(72) Inventors:
• **HUANG, Jun
  Shenzhen, Guangdong 518057 (CN)**
• **MA, Cong
  Shenzhen, Guangdong 518057 (CN)**

(74) Representative: **Deambrogi, Edgardo et al
Jacobacci & Partners S.p.A.
Corso Emilia 8
10152 Torino (IT)**

(54) **ANGLE-OF-ARRIVAL ESTIMATION METHOD AND APPARATUS FOR CHANNEL SOUNDING REFERENCE SIGNAL (SRS)**

(57) Embodiments of the present disclosure provide a method and apparatus for estimating an angle of arrival of a channel Sounding Reference Signal (SRS). By means of the present disclosure, a plurality of passive antennas receive, in a time-division manner, SRSs configured at a specified comb position, then a same active antenna channel amplifies and samples the SRSs received by the plurality of passive antennas, and the amplified and sampled SRSs are segmented, and angles of arrival of the SRSs are estimated based on each segment of the SRSs.

A plurality of passive antennas receive, in a time-division manner, SRSs configured at a specified comb position — S202

A same active antenna channel amplifies and samples the SRSs received by the plurality of passive antennas — S204

Segment the amplified and sampled SRSs, and estimate angles of arrival of the SRSs based on each segment of the SRSs — S206

Fig. 2

EP 4 598 065 A1

## Description

### Technical Field

Embodiments of the present disclosure relate to the field of communications, and in particular, to a method and apparatus for estimating an angle of arrival of a channel Sounding Reference Signal (SRS).

### Background

In a mobile cellular system, acquiring position information about a user by measuring an Angle-of-Arrival (AOA) of a user signal is a common positioning means. For a macro base station having a plurality of active antenna channels that can be calibrated (including time delay calibration and phase calibration between channels), arrival signals of the plurality of antenna channels can be measured simultaneously in a channel SRS symbol, so as to directly calculate an AOA. However, the macro base station has a high cost, and in many scenarios, some low-cost small base stations are used for coverage in order to reduce the cost. However, some of these small base stations have only one active antenna channel, and even other small base stations comprise a plurality of active antenna channels, no coupling loop exists between the channels, such that channel calibration cannot be achieved. For the low-cost small base stations above, it is not feasible to employ the macro base station approach for AOA estimation. Therefore, it is necessary to design a new AOA estimation method and apparatus to assist the low-cost base stations in measuring the AOA of a terminal signal.

### Summary

Embodiments of the present disclosure provide a method and apparatus for estimating an Angle-of-Arrival (AOA) of a channel Sounding Reference Signal (SRS), so as to at least solve the problem in the related art that it is not feasible for small base stations to employ the macro base station approach for AOA estimation.

According to some embodiments of the present disclosure, provided is a method for estimating an AOA of a channel SRS, comprising: a plurality of passive antennas receiving, in a time-division manner, SRSs configured at a specified comb position; a same active antenna channel amplifying and sampling the SRSs received by the plurality of passive antennas; and segmenting the amplified and sampled SRSs, and estimating AOAs of the SRSs based on each segment of the SRSs.

According to some other embodiments of the present disclosure, provided is an apparatus for estimating an AOA of a channel SRS, comprising: a passive antenna array, comprising a plurality of passive antennas, configured to receive, in a time-division manner, SRSs configured at a specified comb position; an electronic switch, configured to switch among the plurality of passive antennas according to an antenna switching rule under the control of an electronic switch control signal; an active antenna channel, configured to amplify and sample the SRSs received by the plurality of passive antennas and then output same; and a baseband processing module, configured to provide the electronic switch control signal, segment the SRSs output by the active antenna channel, and estimate AOAs of the SRSs based on each segment of the SRSs.

According to still some other embodiments of the present disclosure, further provided is a computer-readable storage medium storing a computer program, wherein the computer program is configured to execute the steps in any one of the method embodiments when running.

According to still some other embodiments of the present disclosure, further provided is an electronic apparatus, comprising a memory and a processor; wherein the memory stores a computer program, and the processor is configured to run the computer program to execute the steps in any one of the method embodiments.

### Brief Description of the Drawings

Fig. 1 is a structural block diagram of hardware of a mobile terminal for a method for estimating an AOA of an SRS according to embodiments of the present disclosure;

Fig. 2 is a flowchart of a method for estimating an AOA of an SRS according to embodiments of the present disclosure;

Fig. 3 is a flowchart of a method for estimating an AOA of an SRS according to embodiments of the present disclosure;

Fig. 4 is a flowchart of a method for estimating an AOA according to embodiments of the present disclosure;

Fig. 5 is a structural block diagram of an apparatus for estimating an AOA of an SRS according to embodiments of the present disclosure;

Fig. 6 is a structural block diagram of an apparatus for estimating an AOA of an SRS according to embodiments of the present disclosure;

Fig. 7 is a structural block diagram of a baseband processing module according to embodiments of the present disclosure;

Fig. 8 is a structural block diagram of a baseband processing module according to embodiments of the present disclosure;

Fig. 9 is a flowchart of a method for estimating an AOA of an SRS according to scenario embodiments of the present disclosure;

Fig. 10 is a structural block diagram of an apparatus for estimating an AOA of a signal according to scenario embodiments of the present disclosure;

Fig. 11 is a flowchart of a method for estimating an AOA of an SRS according to scenario embodiments of the present disclosure; and

Fig. 12 is a schematic diagram of switch switching and data segment interception according to scenario embodiments of the present disclosure.

## Detailed Description of the Embodiments

Hereinafter, embodiments of the present disclosure are described in detail with reference to the accompanying drawings and in conjunction with the embodiments.

It is to be noted that the terms "first", "second". in the description, claims and drawings of the present disclosure are used to distinguish similar objects, and are not necessarily used to describe a specific sequence or a precedence order.

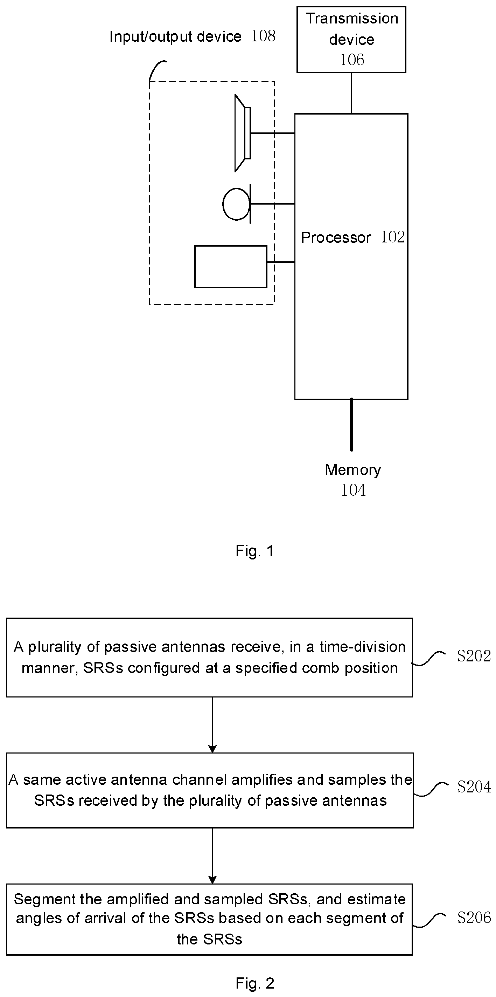

Method embodiments provided in the embodiments of the present disclosure can be executed in a mobile terminal, a computer terminal or a similar computing apparatus. Taking running on a computer terminal as an example, Fig. 1 is a structural block diagram of hardware of a mobile terminal for a method for estimating an AOA of an SRS according to embodiments of the present disclosure. As shown in Fig. 1, the computer terminal may comprise: one or more (only one shown in Fig. 1) processors 102 (the processors 102 may comprise, but is not limited to processing apparatuses such as a microprocessor, MCU or a programmable logic device, FPGA); and a memory 104 for storing data; wherein the computer terminal can further comprise a transmission device 106 and an input/output device 108 having communication functions. A person of ordinary skill in the art would understand that the structure shown in Fig. 1 is merely exemplary, and does not limit the structure of the computer terminal. For example, the computer terminal may also comprise more or fewer assemblies than those shown in Fig. 1, or have different configurations from that shown in Fig. 1.

The memory 104 may be configured to store a computer program, for example, a software program and module of application software, such as a computer program corresponding to the method for estimating an AOA of an SRS in the embodiments of the present disclosure; and the processor 102 executes various functional applications and data processing by running the computer program stored in the memory 104, i.e. implementing the described method. The memory 104 may comprise a high-speed random access memory, and may further comprise a non-transitory memory, such as one or more magnetic storage apparatuses, flash memories or other non-transitory solid-state memories. In some examples, the memory 104 may further comprise memories remotely arranged with respect to the processors 102, and these remote memories may be connected to the computer terminal via a network. Examples of the network comprise, but not limited to the Internet, an intranet, a local area network, a mobile communication network and combinations thereof.

The transmission device 106 is configured to receive or send data via a network. Specific examples of the network may comprise a wireless network provided by a communication provider of the computer terminal. In an example, the transmission device 106 comprises a Network Interface Controller (NIC for short) which may be connected to other network devices by means of a base station, thereby being able to communicate with the Internet. In an example, the transmission device 106 may be a radio frequency (RF for short) module which is configured to communicate with the Internet in a wireless manner.

The embodiments of the present disclosure provide a method for estimating an AOA of an SRS running on the computer terminal. Fig. 2 is a flowchart of a method for estimating an AOA of an SRS according to embodiments of the present disclosure. As shown in Fig. 2, the flow comprises the following steps:

At step S202, a plurality of passive antennas receive, in a time-division manner, SRSs configured at a specified comb position;

At step S204, a same active antenna channel amplifies and samples the SRSs received by the plurality of passive antennas; and

At step S206, the amplified and sampled SRSs are segmented, and AOAs of the SRSs are estimated based on each segment of the SRSs.

By means of the above steps, the plurality of passive antennas receive, in a time-division manner, the SRSs configured at a specified comb position, then the same active antenna channel amplifies and samples the SRSs received by the plurality of passive antennas, and the amplified and sampled SRSs are segmented, and AOAs of the SRSs are estimated based on each segment of the SRSs, so as to at least solve the problem in the related art that it is not feasible for small base stations to employ the macro base station approach for AOA estimation, achieving the effect of efficient and rapid AOA estimation.

The entity for executing the foregoing steps may be, but is not limited to, a base station, a terminal.

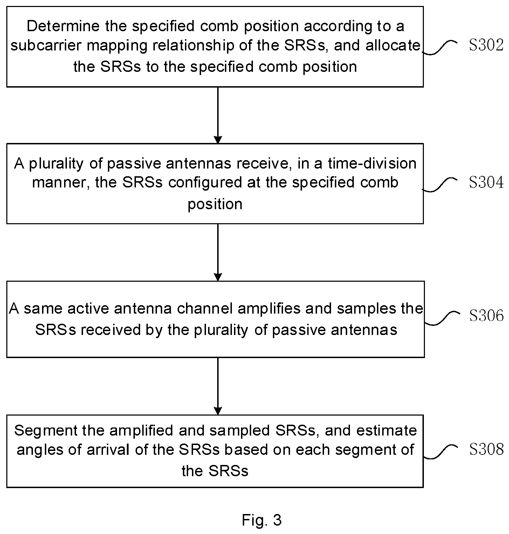

In some exemplary embodiments, before the plurality of passive antennas receiving, in a time-division manner, the SRSs configured at the specified comb position, the method further comprises: the specified comb position is determined according to a subcarrier mapping relationship of the SRSs, and the SRSs are allocated to the specified comb position. Fig. 3 is a flowchart of a method for estimating an AOA of an SRS according to embodiments of the present disclosure. As shown in Fig. 3, the flow comprises the following steps:

At step S302, a specified comb position is determined according to a subcarrier mapping relationship of SRSs, and the SRSs are allocated to the specified comb position;

At step S304, a plurality of passive antennas receive, in a time-division manner, the SRSs configured at the specified comb position;

At step S306, a same active antenna channel amplifies and samples the SRSs received by the plurality of passive antennas; and

At step S308, the amplified and sampled SRSs are segmented, and AOAs of the SRSs are estimated based on each segment of the SRSs.

In some exemplary embodiments, the plurality of passive antennas receiving, in a time-division manner, the SRSs configured at the specified comb position comprises: the plurality of passive antennas receive the SRSs in a time-division manner by means of preset antenna switching. In a specific implementation process, the plurality of passive antennas may be controlled by an electronic switch to implement antenna switching.

In some exemplary embodiments, the amplified and sampled SRSs being segmented comprises: taking the switching position of each antenna switching as a reference, intercepting data of $L/K$ points before the switching position as a segment, wherein $L$ is the length of the whole SRS data symbol, and $K$ is the number of combs at the comb position.

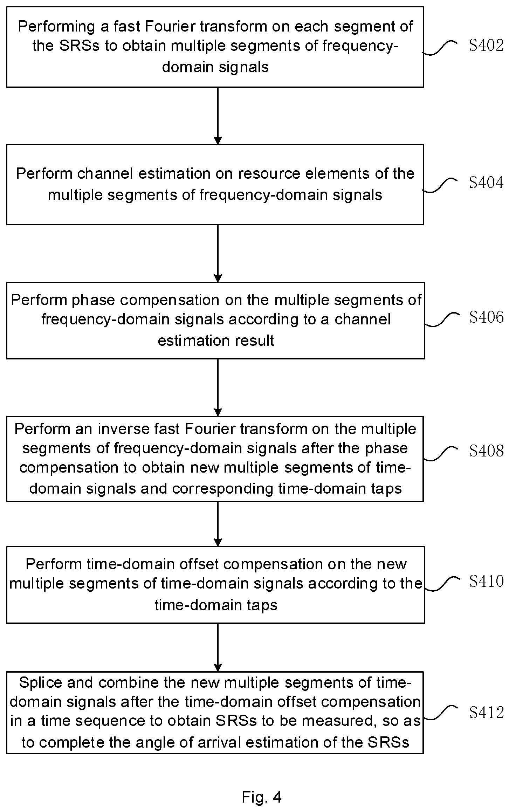

In some exemplary embodiments, Fig. 4 is a flowchart of a method for estimating an AOA of an SRS according to embodiments of the present disclosure. As shown in Fig. 4, the flow of estimating AOAs of the SRSs based on each segment of the SRSs comprises the following steps:

At step S402, Fast Fourier Transform (FFT) is performed on each segment of the SRSs to obtain multiple segments of frequency-domain signals;

At step S404, channel estimation is performed on Resource Elements (REs) of the multiple segments of frequency-domain signals;

At step S406, phase compensation is performed on the multiple segments of frequency-domain signals according to the channel estimation result;

At step S408, Inverse Fast Fourier Transform (IFFT) is performed on the multiple segments of frequency-domain signals after the phase compensation to obtain new multiple segments of time-domain signals and corresponding time-domain taps;

At step S410, time-domain offset compensation is performed on the new multiple segments of time-domain signals according to the time-domain taps; and

At step S412, the new multiple segments of time-domain signals after the time-domain offset compensation are spliced and combined in a time sequence to obtain SRSs to be measured, so as to complete the AOA estimation of the SRSs.

In a specific implementation process, the described step of estimating AOAs of the SRSs based on each segment of the SRSs can be performed in the baseband.

In some exemplary embodiments, before performing IFFT on the multiple segments of frequency-domain signals after the phase compensation, the method further comprises: the ends of the multiple segments of frequency-domain signals after the phase compensation are padded with zeros until padding to the $L$ th data point, wherein, $L$ is the length of the whole SRS data symbol.

In some exemplary embodiments, time-domain offset compensation being performed on the new multiple segments of time-domain signals according to the time-domain taps comprises: the new multiple segments of time-domain signals are cyclically shifted according to the time-domain taps, wherein for the $m$th segment of time-domain signal, $(K - m + 1)KN$ sampling points are cyclically shifted left, wherein, $M$ is the number of passive antennas, $K$ is the number of combs at the comb position, and $m = 1,2,3,\cdots,M - 1$ and $N$ are preset adjustable parameters.

From the description of the described embodiments, a person skilled in the art would have been able to clearly understand that the methods in the described embodiments may be implemented by using software and necessary general hardware platforms, and of course may also be implemented using hardware, but in many cases, the former is a better embodiment. On the basis of such understanding, the portion of the technical solution of the present disclosure that contributes in essence or to the related art may be embodied in the form of a software product stored in a storage medium (such as an ROM/RAM, a magnetic disk and an optical disc); and the storage medium comprises several instructions to cause a terminal device (which may be a mobile phone, a computer, a server or a network device.) to perform the method according to the various embodiments of the present disclosure.

The present embodiment further provides an apparatus for estimating an AOA of a channel SRS, the apparatus is configured to implement the described embodiments and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and could have been conceived.

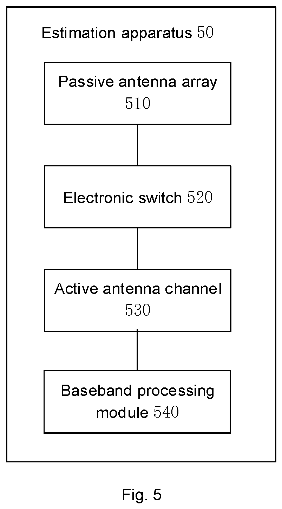

Fig. 5 is a structural block diagram of an apparatus for estimating an AOA of an SRS according to embodiments of the present disclosure. As shown in Fig. 5, the estimation apparatus 50 comprises: a passive antenna array 510, comprising a plurality of passive antennas and configured to receive, in a time-division manner, SRSs configured at a specified comb position; an electronic switch 520, configured to switch among the plurality of passive antennas according to an antenna switching rule under the control of an electronic switch control signal; an active antenna channel 530, configured to amplify and sample the SRSs received by the plurality of passive antennas and output same; and a baseband processing module 540, configured to provide the electronic switch control signal, segment the SRSs output by the active antenna channel, and estimate AOAs of the SRSs based on each segment of the SRSs.

In some exemplary embodiments, the plurality of passive antennas of the passive antenna array 510 receive the SRSs by means of preset antenna switching in a time-division manner.

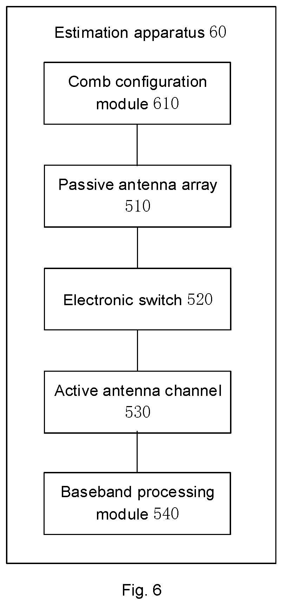

In some exemplary embodiments, Fig. 6 is a structural block diagram of an apparatus for estimating an AOA of an SRS according to embodiments of the present disclosure. As shown in Fig. 6, the estimation apparatus 60 further comprises, in addition to the structural modules in Fig. 5, a comb configuration module 610, configured to determine a specified comb position according to a subcarrier mapping relationship of the SRSs, and allocate the SRSs to the specified comb position.

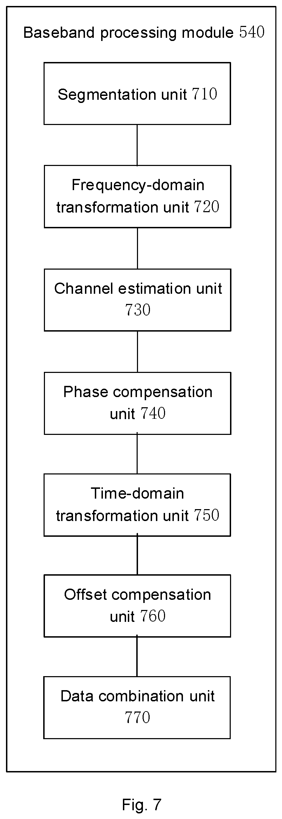

In some exemplary embodiments, Fig. 7 is a structural block diagram of a baseband processing module according to embodiments of the present disclosure. As shown in Fig. 7, the baseband processing module 540 comprises: a segmentation unit 710, configured to segment an SRS to obtain each segment of SRS; a frequency-domain transformation unit 720, configured to perform an FFT on each segment of SRS to obtain multiple segments of frequency-domain signals; a channel estimation unit 730, configured to perform channel estimation on REs of the multiple segments of frequency-domain signals; a phase compensation unit 740, configured to perform phase compensation on the multiple segments of frequency-domain signals according to the channel estimation result; a time-domain transformation unit 750, configured to perform an IFFT on the multiple segments of frequency-domain signals after the phase compensation to obtain new multiple segments of time-domain signals and corresponding time-domain taps; an offset compensation unit 760, configured to perform time-domain offset compensation on the new multiple segments of time-domain signals according to the time-domain taps; and a data combination unit 770, configured to spice and combine the new multiple segments of time-domain signals after the time-domain offset compensation in a time sequence to obtain SRSs to be measured, so as to complete the AOA estimation of the SRSs.

In some exemplary embodiments, the segmentation unit 710 of the baseband processing module 540, taking the switching position of each antenna switching as a reference, intercepts data of $L/K$ points before the switching position as a segment, wherein, $L$ is the length of the whole SRS data symbol, and $K$ is the number of combs at the comb position.

In some exemplary embodiments, the offset compensation unit 760 cyclically shifts the new multiple segments of time-domain signals according to the time-domain taps, wherein for the $m$th segment of time-domain signal, $(K-m+1)KN$ sampling points are cyclically shifted left, wherein, $M$ is the number of passive antennas, $K$ is the number of combs at the comb position, and $m = 1,2,3,\cdots,M - 1$ and $N$ are preset adjustable parameters.

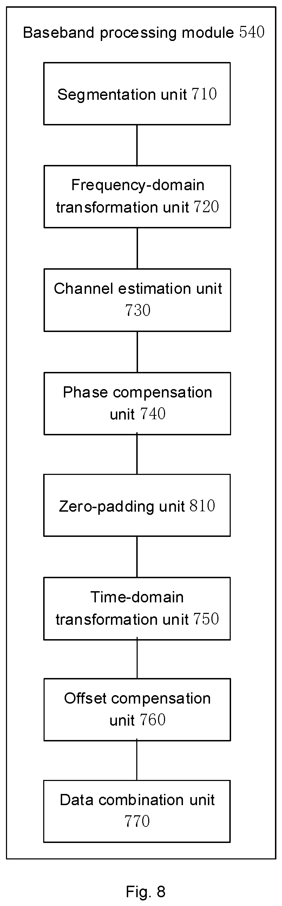

In some exemplary embodiments, Fig. 8 is a structural block diagram of a baseband processing module according to embodiments of the present disclosure. As shown in Fig. 8, the baseband processing module 540 further comprises, in addition to the units in Fig. 7, a zero-padding unit 810, configured to pad the ends of the multiple segments of frequency-domain signals after the phase compensation with zero until padding to the $L$th data point, wherein, $L$ is the length of the whole SRS data symbol.

It should be noted that the described modules may be implemented by software or hardware. The latter may be implemented in the following manner, but is not limited thereto: all the described modules are located in the same processor; or the modules are respectively located in different processors in any arbitrary combination manner.

Embodiments of the present disclosure further provide a computer-readable storage medium, the computer-readable storage medium storing a computer program, wherein the computer program is configured to execute the steps in any one of the method embodiments when running.

In some exemplary embodiments, the computer-readable storage medium may comprise, but is not limited to: any medium that can store a computer program, such as a USB flash drive, a Read-Only Memory (ROM for short), a Random Access Memory (RAM for short), a removable hard disk, a magnetic disk, or an optical disc.

Embodiments of the present disclosure further provide an electronic apparatus, comprising a memory and a processor; wherein the memory stores a computer program, and the processor is configured to run the computer program to execute the steps in any one of the method embodiments above.

In some exemplary embodiments, the electronic apparatus can further comprise a transmission device and an input/output device, wherein the transmission device is connected to the processor, and the input/output device is connected to the processor.

For specific examples in the present embodiment, reference can be made to the examples described in the embodiments and exemplary embodiments, and thus they will not be repeated again in the present embodiment.

Obviously, a person skilled in the art will understand that various modules or various steps in the present disclosure can be implemented by means of a general computing device, can be integrated on one single computing device, or distributed over a network consisting of a plurality of computing devices, and the various modules or various steps can be implemented by means of program codes executable by a computing device, and thus can be stored in a storage device and executed by a computing device, and in some cases, the shown or described steps may be executed in a sequence different from that shown herein, or they are manufactured into integrated circuit modules, or multiple modules or steps therein are manufactured into a single integrated circuit module. Thus, the present disclosure is not limited to any specific hardware and software combinations.

In order to enable a person skilled in the art to better understand the technical solutions of the present disclosure, the technical solutions of the present disclosure will be described below with reference to specific scenario embodiments.

First scenario embodiment

The method for estimating an AOA of an SRS provided in the first scenario embodiment can be applied to a mobile cellular system.

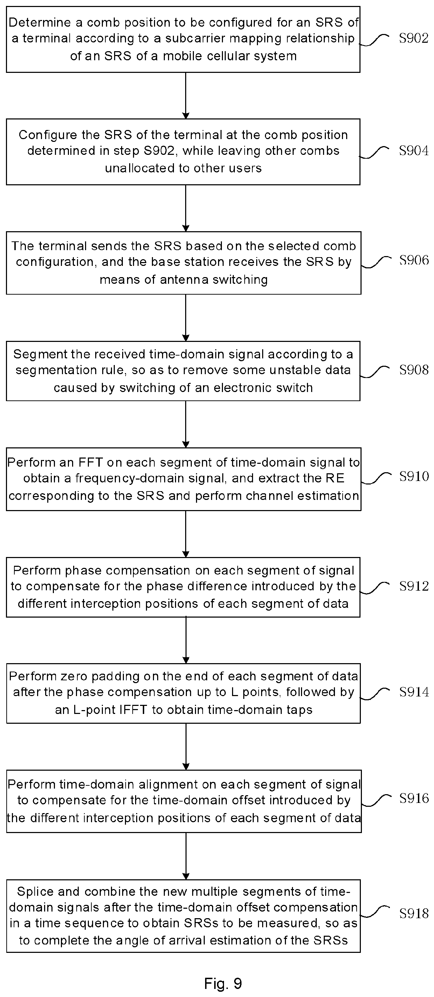

Fig. 9 is a flowchart of a method for estimating an AOA of an SRS according to scenario embodiments of the present disclosure. As shown in Fig. 9, the flow comprises the following steps:

At step S902, a comb position to be configured for the SRS of the terminal is determined according to a subcarrier mapping relationship of the SRS of the mobile cellular system.

The determination method is: finding data to be subjected to IFFT immediately after subcarrier mapping, selecting a first RE therein, and reversely deducing, according to a subcarrier mapping relationship, on which comb the RE is located in an original SRS, the comb being a comb position to be configured for the SRS of the terminal.

At step S904, the SRS of the terminal is configured at the comb position determined in step S902, while leaving other combs unallocated to other users.

In this case, for a $K$-comb system, the time-domain signal sent by the terminal is in a special form of $K$-segment repetition. This special form enables the former segment of data to be considered as the Cyclic Prefix (CP) of the latter segment of data.

At step S906, the terminal sends the SRS based on the selected comb configuration, and the base station receives the SRS by means of antenna switching.

In a receiving process, a receiver always uses the same active channel, but there is an electronic switch between the active channel and a plurality of passive antennas, and the electronic switch performs switching based on a switching rule, so that the active channel is connected to different passive antennas at different times. When the number $M$ of passive antennas in a receiving device is less than or equal to the number $K$ of combs, the switching rule of the electronic switch is that the electronic switch is initially located on a first passive antenna, and when the electronic switch is at a position at a distance of $(K - m + 1)N$ sampling points from the end of the $m$th segment of a repeated sequence, the electronic switch is switched from the $m$th passive antenna to the $m + 1$th passive antenna, wherein $m = 1,2,3\cdots,M - 1$. When the number $M$ of **passive** antennas in the receiving device is greater than the number $K$ of combs, after the $K$ antennas are switched on the current symbol according to the above rule, the remaining $M - K$ antennas may continue to be switched on the next SRS symbol according to the same rule until all the antennas are switched on. Wherein $N$ is an adjustable parameter, and its size depends on the time required for the signal to be stable after the electronic switch is switched.

At step S908, the received time-domain signal is segmented according to a segmentation rule, so as to remove some unstable data caused by switching of the electronic switch.

The specific segmentation rule is that: taking the position of each antenna switching as a reference, data of $L / K$ points before the switching position is intercepted as a segment, wherein, $L$ is the length of the whole data symbol.

At step S910, an FFT is performed on each segment of time-domain signal to obtain a frequency-domain signal. The RE corresponding to the SRS is extracted and is subjected to channel estimation.

At step S912, phase compensation is performed on each segment of signal to compensate for the phase difference introduced by the different interception positions of each segment of data.

The specific compensation method is that for the $m$th segment of data, the required compensation phase is *exp* $[2\pi j(K - m + 1)Nk / L]$, wherein $k$ represents the RE position corresponding to the first valid element in the comb SRS after subcarrier mapping, and $j$ represents the imaginary symbol.

At step S914, zero padding is performed on the end of each segment of data after the phase compensation up to $L$ points, followed by an $L$-point IFFT to obtain time-domain taps.

At step S916, time-domain alignment is performed on each segment of signal to compensate for the time-domain offset introduced by the different interception positions of each segment of data.

The specific alignment method is that for the $m$th segment of data, $(K - m + 1)KN$ sampling points are cyclically shifted left.

At step S918, the new multiple segments of time-domain signals after the time-domain offset compensation are spliced and combined in a time sequence to obtain SRSs to be measured, so as to complete the AOA estimation of the SRSs.

The segments of data processed in step S916 are put together to obtain a group of received signals equivalent to those received simultaneously by the array antenna, and then AOA estimation is performed according to the traditional method for estimating an AOA by means of an array antenna.

In the first scenario embodiment, further provided is an apparatus for estimating an AOA of an SRS for a mobile cellular system, and the apparatus is used for terminal positioning in the cellular mobile system.

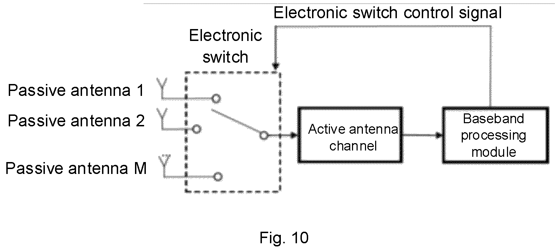

Fig. 10 is a structural block diagram of an apparatus for estimating an AOA of a signal according to scenario embodiments of the present disclosure. As shown in Fig. 10, the apparatus generally comprises a passive antenna array formed by a plurality of passive antennas, an electronic switch, an active antenna channel, and a baseband processing module. The passive antenna array is configured to receive SRSs at different times. The electronic switch switches between different passive antennas according to an antenna switching rule under the control of an electronic switch control signal. The active antenna channel comprises devices such as a low-noise amplifier and an analog-to-digital converter, and is responsible for amplifying and sampling signals received by the passive antennas and then transferring same to the baseband processing module. On the one hand, the baseband processing module needs to provide the electronic switch control signal for the electronic switch, and on the other hand, needs to complete various operations in step S908 to step S918 in the AOA estimation method.

Second scenario embodiment

In the second scenario embodiment, a scenario where the bandwidth is 100 M and the number of passive antennas at an SRS4 comb receiving end is four in a 5G system is taken as an example to describe the specific embodiment of this solution. In this scenario embodiment, the number of passive antennas of the base station is set to four, but this is only for ease of example, and is not intended to limit that only four passive receiving antennas can be used.

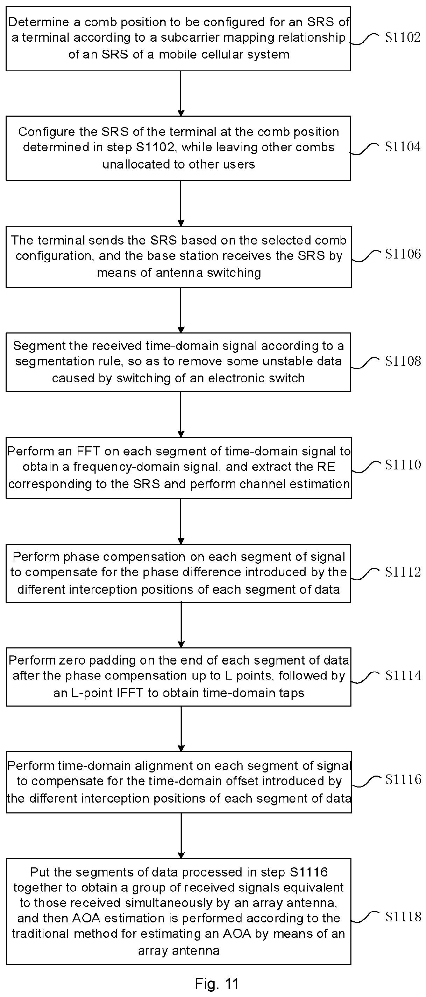

Fig. 11 is a flowchart of a method for estimating an AOA of an SRS according to scenario embodiments of the present disclosure. As shown in Fig. 11, the flow comprises the following steps:

At step S1102, a comb position to be configured for the SRS of the terminal is determined according to a subcarrier mapping relationship of the SRS of the mobile cellular system.

A determination method is: finding data to be subjected to IFFT immediately after subcarrier mapping, selecting a first RE therein, and reversely deducing, according to a subcarrier mapping relationship, on which comb the RE is located in an original SRS, the comb being a comb position to be configured for the SRS of the terminal. For a 5G system with a 100 M bandwidth, it can be determined according to the subcarrier mapping relationship that the first RE in the data subjected to the IFFT corresponds to the sixth RE in the 136th RB in the original SRS. For a 4-comb system, the sixth RE corresponds to comb 2 (the index starts from 0), so it is determined that the SRS of the terminal is to be configured on comb 2.

At step S1104, the SRS of the terminal is configured at the comb position determined in step S1102, and other users are not configured in other comb.

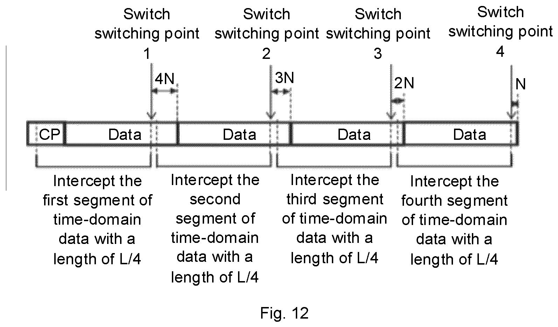

In this case, for a $K$-comb system, the time-domain signal sent by the terminal is in a special form of $K$-segment repetition. This special form enables the former segment of data to be considered as the Cyclic Prefix (CP) of the latter segment of data. Fig. 12 is a schematic diagram of switch switching and data segment interception according to scenario embodiments of the present disclosure. As shown in Fig. 12, for a 4-comb system, $K = 4$, after only an SRS of the comb 2 is configured, four segments of repeated data may appear in a time-domain signal sent by a terminal.

At step S1106, the terminal sends the SRS based on the selected comb configuration, and the base station receives the SRS by means of antenna switching.

In a receiving process, a receiver always uses the same active channel, but there is an electronic switch between the active channel and a plurality of passive antennas, and the electronic switch performs switching based on a switching rule, so that the active channel is connected to different passive antennas at different times. When the number $M$ of passive antennas in a receiving device is less than or equal to the number $K$ of combs, the switching rule of the electronic switch is that the electronic switch is initially located on a first passive antenna, and when the electronic switch is at a position at a distance of $(K - m + 1)N$ sampling points from the end of the $m$th segment of a repeated sequence, the electronic switch is switched from the $m$th passive antenna to the $m + 1$th passive antenna, wherein $m = 1,2,3,\cdots,M - 1$. When the number $M$ of passive antennas in the receiving device is greater than the number $K$ of combs, after the $K$ antennas are switched on the current symbol according to the above rule, the remaining $M - K$ antennas may continue to be switched on the next SRS symbol according to the same rule until all the antennas are switched on. Wherein $N$ is an adjustable parameter, and its size depends on the time required for the signal to be stable after the electronic switch is switched.

In this embodiment, the number of passive antennas is $M = 4$, the number of combs is $K = 4$, and the electronic switch is switched between four antennas. The switching rule is as shown in Fig. 12, the electronic switch starts to switch on the passive antenna 1, and the first switching point is advanced by $4N$ from the end of the first segment of repeated data, where the electronic switch is switched from the passive antenna 1 to the passive antenna 2 here. The second switching point is advanced by $3N$ from the end of the second segment of repeated data, where the electronic switch is switched from the passive antenna 2 to the passive antenna 3. The third switching point is advanced by $2N$ from the end of the third segment of repeated data, where the electronic switch is switched from the passive antenna 3 to the passive antenna 4. The fourth switching point is advanced by $N$ from the end of the fourth segment of repeated data, where the electronic switch is switched from the passive antenna 4 back to the passive antenna 1. N needs to be greater than a stable delay after the electronic switch is switched.

At step S1108, the received time-domain signal is segmented according to a segmentation rule, so as to remove some unstable data caused by switching of the electronic switch.

The specific segmentation rule is that: taking the position of each antenna switching as a reference, data of $L / K$ points before the switching position is intercepted as a segment, wherein, $L$ is the length of the whole data symbol.

For a 5G system with a bandwidth of 100 M and an SRS configuration of 4 combs, the length of one symbol is $L = 4096$. As shown in Fig. 12, the data is cut into four segments, and the length of each intercepted segment is 4096/4=1024 by taking the position of each antenna switching as a reference.

At step S1110, an FFT is performed on each segment of time-domain signal to obtain a frequency-domain signal. The RE corresponding to the SRS is extracted and is subjected to channel estimation.

In this embodiment, for each intercepted segment of data in step S1108, a 1024-point FFT is performed to extract 816 REs corresponding to the SRSs, frequency-domain channel estimation is performed according to a traditional frequency-domain channel estimation method.

At step S1112, phase compensation is performed on each segment of signal to compensate for the phase difference introduced by the different interception positions of each segment of data.

The specific compensation method is that for the $m$th segment of data, the required compensation phase is $exp[2\pi j(K - m + 1)Nk / L]$, wherein $k$ represents the RE position corresponding to the first valid element in the comb SRS after subcarrier mapping.

In this embodiment, after the subcarrier mapping, the RE position corresponding to the first valid element in the SRS configured on comb 2 is 2460, thus k=2460. Therefore, phases that need to be compensated for the four segments of data are respectively:

$$\exp\left(2\pi j \cdot 4N \cdot \frac{615}{1024}\right), \quad \exp\left(2\pi j \cdot 3N \cdot \frac{615}{1024}\right), \quad \exp\left(2\pi j \cdot 2N \cdot \frac{615}{1024}\right) \text{ and } \exp\left(2\pi j \cdot N \cdot \frac{615}{1024}\right).$$

At step S1114, zero padding is performed on the end of each segment of data after the phase compensation up to $L$ points, followed by an $L$-point IFFT to obtain time-domain taps.

In this embodiment, a zero-padding operation is performed on the end of each segment of the 816-point frequency-domain channel estimation results with compensated phase to 4096 points, after which a 4096-point IFFT is performed.

At step S1116, time-domain alignment is performed on each segment of signal to compensate for the time-domain offset introduced by the different interception positions of each segment of data.

The specific alignment method is that for the $m$th segment of data, $(K - m + 1)KN$ sampling points are cyclically shifted left.

In this embodiment, the data transformed in step S1114 is cyclically shifted left, the first segment of data is cyclically shifted left by $16N$ points, the second segment of data is cyclically shifted left by $12N$ points, the third segment of data is cyclically shifted left by $8N$ points, and the fourth segment of data is cyclically shifted left by $4N$ points.

At step S1118, the segments of data processed in step S1116 are put together to obtain a group of received signals equivalent to those received simultaneously by the array antenna, and then AOA estimation is performed according to the traditional method for estimating an AOA by means of an array antenna.

In conclusion, the embodiments of the present disclosure provide a method and apparatus for estimating an AOA of an SRS. On the premise of not changing the form of an SRS of a terminal in a mobile cellular system, the SRS of the terminal to be measured is enabled to present a characteristic of multiple segments of repetition in a time domain by means of smart configuration. This special form enables the former segment of data to be considered as the CP of the latter segment of data, and thus even if one segment of the repeated data is independently intercepted in a multipath environment, inter-subcarrier interference and inter-symbol interference will not be caused. By using this property, the receiving end may use different passive antennas to receive, in a time-division manner, each segment of repeated signals by means of antenna switching, and return the signals to the baseband by means of the same active channel. The baseband only needs to align the phase and the time delay of the segments of data to obtain a group of signals equivalent to those simultaneously received by multiple antennas, and then the AOAs can be estimated by using the existing angle estimation algorithm for array antennas. In the present method, switching of a plurality of antennas is completed within one SRS symbol, and when the number of passive antennas is less than or equal to the number of combs, only one symbol is required to complete AOA estimation without acquiring data of a plurality of symbols, which is also a great advantage of the present method.

The apparatus for estimating an AOA of an SRS provided in the embodiments of the present disclosure generally comprises four parts, namely, a passive antenna array, an electronic switch, an active antenna channel, and a baseband processing module. The passive antenna array is configured to receive SRSs at different times. The electronic switch switches between different passive antennas according to an antenna switching rule under the control of an electronic switch control signal. The active antenna channel comprises devices such as a low-noise amplifier and an analog-to-digital converter, and is responsible for amplifying and sampling signals received by the passive antennas and then transferring same to the baseband processing module. On the one hand, the baseband processing module needs to provide an electronic switch control signal for the electronic switch, and on the other hand, needs to complete various operations such as signal segmentation, FFT, channel estimation, phase compensation, IFFT, time delay compensation and AOA estimation.

The embodiments of the present disclosure utilize a special SRS configuration, and obtain multiple segments of repeated signals in a time domain without changing a communication protocol of a mobile cellular network, so as to achieve rapid AOA estimation. However, in fact, if the limitation of the protocol is not considered, a multiple segments of repeated time-domain sequences can be specially designed, which also can achieve the effect of rapid AOA estimation. The method and apparatus for estimating an AOA of an SRS provided in the present disclosure can be applied to scenarios in which a base station side does not have an inter-antenna calibration capability in 4G and 5G mobile cellular networks, but it is still desired to perform a positioning service on a terminal by means of AOA measurement. The terminal needs to have the capability of sending SRSs according to the protocol. The present disclosure is intended for rapid AOA estimation by low-cost base stations. When multiple such base stations jointly measure the AOA of a terminal's signal, accurate positioning of the terminal can be achieved. If combined with the signal loopback delay measurement technique between the terminal and the base station, single-station positioning of the terminal can be realized.

The content above merely relates to preferred embodiments of the present disclosure, and is not intended to limit the present disclosure. For a person skilled in the art, embodiments of the present disclosure may have various modifications and changes. Any modifications, equivalent replacements, improvements. made within the principle of the present disclosure shall all fall within the scope of protection of the present disclosure.

**Claims**

1. A method for estimating an angle of arrival of a channel Sounding Reference Signal, SRS, comprising:

   receiving, through a plurality of passive antennas, in a time-division manner, SRSs configured at a specified comb position;
   amplifying and sampling, through a same active antenna channel, the SRSs received by the plurality of passive antennas; and
   segmenting the amplified and sampled SRSs, and estimating angles of arrival of the SRSs based on each segment of the SRSs.

2. The method according to claim 1, wherein before receiving, through a plurality of passive antennas, in a time-division manner, SRSs configured at a specified comb position, the method further comprises:
   determining the specified comb position according to a subcarrier mapping relationship of the SRSs, and allocating the SRSs to the specified comb position.

3. The method according to claim 1, wherein receiving, through a plurality of passive antennas, in a time-division manner, SRSs configured at a specified comb position comprises:
   receiving, by the plurality of passive antennas, the SRSs by means of preset antenna switching in a time-division manner.

4. The method according to claim 1, wherein segmenting the amplified and sampled SRSs comprises:
   taking a switching position of each antenna switching as a reference, intercepting data of $L/K$ points before the switching position as a segment, wherein, $L$ is the length of the whole SRS data symbol, and $K$ is the number of combs at the comb position.

5. The method according to claim 1, wherein estimating angles of arrival of the SRSs based on each segment of the SRSs comprises:

   performing a Fast Fourier Transform ,FFT, on each segment of the SRSs to obtain multiple segments of frequency-domain signals;
   performing channel estimation on Resource Elements ,Res, of the multiple segments of frequency-domain signals;
   performing phase compensation on the multiple segments of frequency-domain signals according to a channel estimation result;
   performing an Inverse Fast Fourier Transform ,IFFT, on the multiple segments of frequency-domain signals after the phase compensation to obtain new multiple segments of time-domain signals and corresponding time-domain taps;
   performing time-domain offset compensation on the new multiple segments of time-domain signals according to the time-domain taps; and
   splicing and combining the new multiple segments of time-domain signals after the time-domain offset compensation in a time sequence to obtain SRSs to be measured, so as to complete the angle of arrival estimation of the SRSs.

6. The method according to claim 5, wherein before performing an Inverse Fast Fourier Transform ,IFFT, on the multiple segments of frequency-domain signals after the phase compensation, the method further comprises:
   padding the ends of the multiple segments of frequency-domain signals after the phase compensation with zeros until padding to the $L$ th data point, wherein, $L$ is the length of the whole SRS data symbol.

7. The method according to claim 5, wherein performing time-domain offset compensation on the new multiple segments of time-domain signals according to the time-domain taps comprises:
   cyclically shifting the new multiple segments of time-domain signals according to the time-domain taps, wherein for the $m$th segment of time-domain signal, $(K - m + 1)KN$ sampling points are cyclically shifted left, wherein, $M$ is the number of passive antennas, $K$ is the number of combs at the comb position, and $m = 1,2,3,\cdots,M-1$ and $N$ are preset adjustable parameters.

8. An apparatus for estimating an angle of arrival of a channel Sounding Reference Signal ,SRS, comprising:

a passive antenna array, comprising a plurality of passive antennas, configured to receive, in a time-division manner, SRSs configured at a specified comb position;

an electronic switch, configured to switch among the plurality of passive antennas according to an antenna switching rule under the control of an electronic switch control signal;

an active antenna channel, configured to amplify and sample the SRSs received by the plurality of passive antennas and then output same; and

a baseband processing module, configured to provide the electronic switch control signal, segment the SRSs output by the active antenna channel, and estimate angles of arrival of the SRSs based on each segment of the SRSs.

9. The apparatus according to claim 8, wherein the apparatus further comprises:
a comb configuration module, configured to determine the specified comb position according to a subcarrier mapping relationship of the SRSs, and allocate the SRSs to the specified comb position.

10. The apparatus according to claim 8, wherein the baseband processing module comprises:

a segmentation unit, configured to segment the SRSs to obtain each segment of the SRSs;

a frequency-domain transformation unit, configured to perform a Fast Fourier Transform ,FFT, on each segment of the SRSs to obtain multiple segments of frequency-domain signals;

a channel estimation unit, configured to perform channel estimation on Resource Elements ,Res, of the multiple segments of frequency-domain signals;

a phase compensation unit, configured to perform phase compensation on the multiple segments of frequency-domain signals according to a channel estimation result;

a time-domain transformation unit, configured to perform an Inverse Fast Fourier Transform ,IFFT, on the multiple segments of frequency-domain signals after the phase compensation to obtain new multiple segments of time-domain signals and corresponding time-domain taps;

an offset compensation unit, configured to perform time-domain offset compensation on the new multiple segments of time-domain signals according to the time-domain taps; and

a data combination unit, configured to spice and combine the new multiple segments of time-domain signals after the time-domain offset compensation in a time sequence to obtain SRSs to be measured, so as to complete the angle of arrival estimation of the SRSs.

11. The apparatus according to claim 10, wherein the baseband processing module comprises:
a zero-padding unit, configured to pad the ends of the multiple segments of frequency-domain signals after the phase compensation with zeros until padding to the $L$ th data point, wherein, $L$ is the length of the whole SRS data symbol.

12. A computer-readable storage medium, the computer-readable storage medium storing a computer program which, when executed by a processor, implements the method according to any one of claims 1 to 7.

13. An electronic apparatus, comprising a memory, a processor, and a computer program which is stored in the memory and executable on the processor, wherein the processor implements the method according to any one of claims 1 to 7 when executing the computer program.

Fig. 1

| A plurality of passive antennas receive, in a time-division manner, SRSs configured at a specified comb position | S202 |
|---|---|
| A same active antenna channel amplifies and samples the SRSs received by the plurality of passive antennas | S204 |
| Segment the amplified and sampled SRSs, and estimate angles of arrival of the SRSs based on each segment of the SRSs | S206 |

Fig. 2

Determine the specified comb position according to a
subcarrier mapping relationship of the SRSs, and allocate
the SRSs to the specified comb position — S302

A plurality of passive antennas receive, in a time-division
manner, the SRSs configured at the specified comb
position — S304

A same active antenna channel amplifies and samples the
SRSs received by the plurality of passive antennas — S306

Segment the amplified and sampled SRSs, and estimate
angles of arrival of the SRSs based on each segment of
the SRSs — S308

Fig. 3

Performing a fast Fourier transform on each segment of the SRSs to obtain multiple segments of frequency-domain signals — S402

Perform channel estimation on resource elements of the multiple segments of frequency-domain signals — S404

Perform phase compensation on the multiple segments of frequency-domain signals according to a channel estimation result — S406

Perform an inverse fast Fourier transform on the multiple segments of frequency-domain signals after the phase compensation to obtain new multiple segments of time-domain signals and corresponding time-domain taps — S408

Perform time-domain offset compensation on the new multiple segments of time-domain signals according to the time-domain taps — S410

Splice and combine the new multiple segments of time-domain signals after the time-domain offset compensation in a time sequence to obtain SRSs to be measured, so as to complete the angle of arrival estimation of the SRSs — S412

Fig. 4

Estimation apparatus 50

Passive antenna array
510

Electronic switch 520

Active antenna channel
530

Baseband processing
module 540

Fig. 5

Estimation apparatus 60

Comb configuration
module 610

Passive antenna array
510

Electronic switch 520

Active antenna channel
530

Baseband processing
module 540

Fig. 6

Baseband processing module 540

Segmentation unit 710

Frequency-domain transformation unit 720

Channel estimation unit 730

Phase compensation unit 740

Time-domain transformation unit 750

Offset compensation unit 760

Data combination unit 770

Fig. 7

Baseband processing module 540

Segmentation unit 710

Frequency-domain transformation unit 720

Channel estimation unit 730

Phase compensation unit 740

Zero-padding unit 810

Time-domain transformation unit 750

Offset compensation unit 760

Data combination unit 770

Fig. 8

Determine a comb position to be configured for an SRS of a terminal according to a subcarrier mapping relationship of an SRS of a mobile cellular system — S902

Configure the SRS of the terminal at the comb position determined in step S902, while leaving other combs unallocated to other users — S904

The terminal sends the SRS based on the selected comb configuration, and the base station receives the SRS by means of antenna switching — S906

Segment the received time-domain signal according to a segmentation rule, so as to remove some unstable data caused by switching of an electronic switch — S908

Perform an FFT on each segment of time-domain signal to obtain a frequency-domain signal, and extract the RE corresponding to the SRS and perform channel estimation — S910

Perform phase compensation on each segment of signal to compensate for the phase difference introduced by the different interception positions of each segment of data — S912

Perform zero padding on the end of each segment of data after the phase compensation up to L points, followed by an L-point IFFT to obtain time-domain taps — S914

Perform time-domain alignment on each segment of signal to compensate for the time-domain offset introduced by the different interception positions of each segment of data — S916

Splice and combine the new multiple segments of time-domain signals after the time-domain offset compensation in a time sequence to obtain SRSs to be measured, so as to complete the angle of arrival estimation of the SRSs — S918

Fig. 9

Electronic switch control signal

Electronic
switch

Passive antenna 1

Passive antenna 2

Active antenna
channel

Baseband
processing
module

Passive antenna M

Fig. 10

Determine a comb position to be configured for an SRS of a terminal according to a subcarrier mapping relationship of an SRS of a mobile cellular system ⟋ S1102

Configure the SRS of the terminal at the comb position determined in step S1102, while leaving other combs unallocated to other users ⟋ S1104

The terminal sends the SRS based on the selected comb configuration, and the base station receives the SRS by means of antenna switching ⟋ S1106

Segment the received time-domain signal according to a segmentation rule, so as to remove some unstable data caused by switching of an electronic switch ⟋ S1108

Perform an FFT on each segment of time-domain signal to obtain a frequency-domain signal, and extract the RE corresponding to the SRS and perform channel estimation ⟋ S1110

Perform phase compensation on each segment of signal to compensate for the phase difference introduced by the different interception positions of each segment of data ⟋ S1112

Perform zero padding on the end of each segment of data after the phase compensation up to L points, followed by an L-point IFFT to obtain time-domain taps ⟋ S1114

Perform time-domain alignment on each segment of signal to compensate for the time-domain offset introduced by the different interception positions of each segment of data ⟋ S1116

Put the segments of data processed in step S1116 together to obtain a group of received signals equivalent to those received simultaneously by an array antenna, and then AOA estimation is performed according to the traditional method for estimating an AOA by means of an array antenna ⟋ S1118

Fig. 11

Switch switching point 1 Switch switching point 2 Switch switching point 3 Switch switching point 4

4N 3N 2N N

| CP | Data | Data | Data | Data |

Intercept the first segment of time-domain data with a length of L/4

Intercept the second segment of time-domain data with a length of L/4

Intercept the third segment of time-domain data with a length of L/4

Intercept the fourth segment of time-domain data with a length of L/4

Fig. 12

## INTERNATIONAL SEARCH REPORT

| International application No. |
| --- |
| **PCT/CN2023/091867** |

### A. CLASSIFICATION OF SUBJECT MATTER

H04W4/02(2018.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 中兴, 黄俊, 马聪, 信道, 探测, 参考信号, 到达角, 定位, 基站, 宏基站, 微基站, 皮基站, 天线, 分时, 依次, 开关, 有源, 梳分, 分段, 资源元素, 快速傅里叶, 相关, 耦合, 校准, 偏移补偿, 相位补偿, ZTE, huang jun, ma cong, SRS, AOA, angle of arrival, macro site, pico RRU, antenna, comb, RE, FFT

### C. DOCUMENTS CONSIDERED TO BE RELEVANT

| Category* | Citation of document, with indication, where appropriate, of the relevant passages | Relevant to claim No. |
| --- | --- | --- |
| A | CN 110839278 A (CHINA MOBILE COMMUNICATIONS CORPORATION RESEARCH INSTITUTE et al.) 25 February 2020 (2020-02-25) description, paragraphs [0002]-[0005] and [0061]-[0067], and figures 1-9 | 1-13 |
| A | CN 102362441 A (LG ELECTRONICS INC.) 22 February 2012 (2012-02-22) entire document | 1-13 |
| A | CN 111865370 A (HUAWEI TECHNOLOGIES CO., LTD.) 30 October 2020 (2020-10-30) entire document | 1-13 |
| A | CN 103563462 A (BROADCOM CORP.) 05 February 2014 (2014-02-05) entire document | 1-13 |
| A | CN 108631984 A (ZTE CORP.) 09 October 2018 (2018-10-09) entire document | 1-13 |
| A | US 2012182857 A1 (TEXAS INSTRUMENTS INC. et al.) 19 July 2012 (2012-07-19) entire document | 1-13 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 August 2023** | **18 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/091867**

| Patent document cited in search report | | | Publication date (day/month/year) | Patent family member(s) | | | Publication date (day/month/year) |
|---|---|---|---|---|---|---|---|
| CN | 110839278 | A | 25 February 2020 | None | | | |
| CN | 102362441 | A | 22 February 2012 | US | 2014355545 | A1 | 04 December 2014 |
| | | | | US | 9306651 | B2 | 05 April 2016 |
| | | | | KR | 20110130456 | A | 05 December 2011 |
| | | | | KR | 101253204 | B1 | 10 April 2013 |
| | | | | US | 2012014349 | A1 | 19 January 2012 |
| | | | | US | 9270356 | B2 | 23 February 2016 |
| | | | | US | 2019296874 | A1 | 26 September 2019 |
| | | | | US | 10887064 | B2 | 05 January 2021 |
| | | | | US | 2016119100 | A1 | 28 April 2016 |
| | | | | US | 9577805 | B2 | 21 February 2017 |
| | | | | US | 2017126382 | A1 | 04 May 2017 |
| | | | | US | 10574412 | B2 | 25 February 2020 |
| | | | | WO | 2010110568 | A2 | 30 September 2010 |
| | | | | WO | 2010110568 | A3 | 23 December 2010 |
| CN | 111865370 | A | 30 October 2020 | None | | | |
| CN | 103563462 | A | 05 February 2014 | US | 2014071922 | A1 | 13 March 2014 |
| | | | | US | 9363055 | B2 | 07 June 2016 |
| | | | | WO | 2012155326 | A1 | 22 November 2012 |
| | | | | EP | 2710844 | A1 | 26 March 2014 |
| | | | | EP | 2710844 | A4 | 05 November 2014 |
| | | | | EP | 2710844 | B1 | 07 November 2018 |
| CN | 108631984 | A | 09 October 2018 | WO | 2018171805 | A1 | 27 September 2018 |
| US | 2012182857 | A1 | 19 July 2012 | US | 2020295980 | A1 | 17 September 2020 |
| | | | | US | 11277290 | B2 | 15 March 2022 |
| | | | | US | 2015236882 | A1 | 20 August 2015 |
| | | | | US | 9628311 | B2 | 18 April 2017 |
| | | | | US | 9001641 | B2 | 07 April 2015 |
| | | | | US | 2022200833 | A1 | 23 June 2022 |
| | | | | US | 2017272297 | A1 | 21 September 2017 |
| | | | | US | 10567204 | B2 | 18 February 2020 |

Form PCT/ISA/210 (patent family annex) (July 2022)